(19) Europäisches Patentamt
European Patent Office
Office européen des brevets

(11) EP 2 354 752 A1

(12) EUROPEAN PATENT APPLICATION

(43) Date of publication:
10.08.2011 Bulletin 2011/32

(51) Int Cl.:
*F41G 3/02* (2006.01)   *F41G 3/06* (2006.01)
*G01S 17/02* (2006.01)   *G01C 19/38* (2006.01)
*G01S 7/497* (2006.01)

(21) Application number: 11152152.2

(22) Date of filing: 25.01.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 05.02.2010 US 301896 P
09.06.2010 US 796763

(71) Applicant: Honeywell International Inc.
Morristown, NJ 07962 (US)

(72) Inventors:
• Hartman, Randolph G.
Morristown, NJ 07962-2245 (US)

• Jeerage, Mahesh K.
Morristown, NJ 07962-2245 (US)
• Lindquist, Erik
Morristown, NJ 07962-2245 (US)
• Soehren, Wayne A.
Morristown, NJ 07962-2245 (US)
• Kirk, James C.
Morristown, NJ 07962-2245 (US)

(74) Representative: Buckley, Guy Julian
Patent Outsourcing Limited
1 King Street
Bakewell
Derbyshire DE45 1DZ (GB)

(54) **Target locator device and methods**

(57) Systems and methods for a target locator device are provided. In one embodiment, a target locator device comprises: a high performance gyroscope; an inertial measurement unit including an accelerometer triad and a gyroscope triad; a rangefinder; a global navigation satellite system (GNSS) receiver; and a processor coupled to the high performance gyroscope, the inertial measurement unit, the rangefinder and the GNSS receiver. The processor derives an alignment heading from a heading measurement provided by the high performance gyroscope. The processor calculates a heading to a target based on a deviation from the alignment heading as measured from a heading and elevation measurement determined from the inertial measurement unit.

FIG. 1

**Description**

CROSS-REFERENCE TO RELATED APPLICATIONS

This application is related to and claims the benefit of United States provisional patent application serial number 61/301,896 (attorney docket number H0024846-5603) entitled "TARGET LOCATOR DEVICE AND METHODS" filed on February 5, 2010 and referred to herein as the '896 application. The '896 application is hereby incorporated herein by reference.

BACKGROUND

Soldiers use target locator devices to estimate the coordinates of a distant target. On today's battlefield ground troops rely heavily on Close Air Support (CAS). Targets are often in close proximity to own troops and civilians. Today's high precision small GPS guided ordnance mean less fratricide and collateral damage. But these systems are used under many different conditions. Stealthy units use the targeting systems to locate targets at a distance, and generally have leisurely minutes to make the measurement. Units under fire from nearby enemy troops, particularly small Special Operations Forces units that are under ambush, often find themselves needing to provide weapons platforms with targeting coordinates of nearby enemies in situations where seconds count. The importance of fast and accurate target position information has become crucial, yet providing accurate target information to weapons platforms has often been the weak link in the chain of CAS employment.

Target position estimation is accomplished by measuring the bearing and distance to the target relative to the observer. With the observer's GPS position, the targeting system can compute the coordinates of the target. These coordinates are then sent to the weapons delivery platform, where they are used to guide weapon to the target. Current targeting systems come in two forms, high accuracy units of a size and weight that are impractical as everyday equipment for the operator and that take time to come up to speed; and small lightweight units that come up to speed quickly against close targets but lack the accuracy.

For the reasons stated above and for other reasons stated below which will become apparent to those skilled in the art upon reading and understanding the specification, there is a need in the art for improved systems and methods for target location.

SUMMARY

The Embodiments of the present invention provide methods and systems for target location and will be understood by reading and studying the following specification.

Systems and methods for a target locator device are provided. In one embodiment, a target locator device comprises: a high performance gyroscope; an inertial measurement unit including an accelerometer triad and a gyroscope triad; a rangefinder; a global navigation satellite system (GNSS) receiver; and a processor coupled to the high performance gyroscope, the inertial measurement unit, the rangefinder and the GNSS receiver. The processor derives an alignment heading from a heading measurement provided by the high performance gyroscope. The processor calculates a heading to a target based on a deviation from the alignment heading as measured from a heading and elevation measurement determined from the inertial measurement unit.

DRAWINGS

Embodiments of the present invention can be more easily understood and further advantages and uses thereof more readily apparent, when considered in view of the description of the preferred embodiments and the following figures in which:

Figure 1 is a block diagram illustrating a target locator device of one embodiment of the present invention

Figure 2 is a flow chart illustrating an alignment mode process for a target locator device of one embodiment of the present invention;

Figure 3 is a flow chart illustrating a scanning mode process for a target locator device of one embodiment of the present invention; and

Figures 4A and 4B illustrates a physical layout and mechanical configuration of a target locator device of one embodiment of the present invention;

In accordance with common practice, the various described features are not drawn to scale but are drawn to emphasize features relevant to the present invention. Reference characters denote like elements throughout figures and text.

**DETAILED DESCRIPTION**

In the following detailed description, reference is made to the accompanying drawings that form a part hereof, and in which is shown by way of specific illustrative embodiments in which the invention may be practiced. These embodiments are described in sufficient detail to enable those skilled in the art to practice the invention, and it is to be understood that other embodiments may be utilized and that logical, mechanical and electrical changes may be made without departing from the scope of the present invention. The following detailed description is, therefore, not to be taken in a limiting sense.

Embodiments of the present invention provide systems and methods for a precision target locator that can estimate the position of a target with equal or better than two meter error per kilometer class, all within a handheld package suitable for foot soldiers. This improved accuracy, and the increased speed at which the target locator device may go from an off condition to a ready-to-use mode as compared to existing target locators, is gained in one embodiment of the present invention through the use of one high performance gyro and an optimization of the calibration process that exploits the tactical characteristics of the operator on foot.

In one embodiment, a calibration process is easily performed in the field without additional equipment or reference points. The size and weight of the target locator device (for example, the size of an oversized binocular) allows handheld operation by a soldier for close up targets (for example, under 1 kilometer), and tripod operation for distant targets. In one embodiment, power consumption is held to a minimum through active power management in the target locator device.

Other embodiments provide a target locator device that can be operated quickly as a handheld device by an operator for close-up targets and yet may be used for distant targets when provided additional time to calibrate/align. The system provides high accuracy (for example, an accuracy of 7 meters at a range of 3.5 kilometers), is light weight (for example, about 8 lbs), has low power consumption (for example, may go several hours between charging) and is economical to produce in large volumes.

Other benefits of embodiments include: night and day operation; low visual signature displays and controls; weight, easy to carry, one per squad, with the entire device one-man-portable; long lasting batteries — min of one hour operation; work in severe environments, temperature, humidity, etc.; ease of operation, used while under fire; and can operate on different target types (for example distant targets of 1-3.5 km or sudden, very close targets at under 1 kilometer).

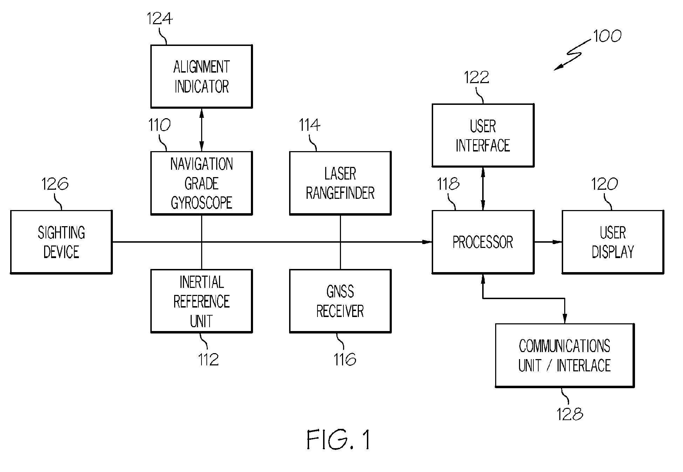

Figure 1 is a block diagram illustrating a target locator device 100 of one embodiment of the present invention. Target locator device 100 comprises a high performance gyroscope 110, an inertial measurement unit 112 (for example, a MEMS based inertial measurement unit (IMU)), a rangefinder 114 (for example, a Laser Range Finder (LRF)), a global navigation satellite system (GNSS) receiver 116 (such as a global positioning system (GPS) receiver, for example) and a processor. In one embodiment, target locator device 100 further comprises a user interface 122, a user display 120, and a sighting device 126 (for example, a sighting scope, a night vision scope, or binoculars). In one embodiment, user display 120 provides information that is viewable through the sighting device 126. In another embodiment, user interface 122 is integrated into user display 120 (for example, a touch-screen display). In one embodiment, Target locator device 100 further comprises a communication unit to upload results, or an interface for outputting data to such a communication unit as shown at 128. In one embodiment, a communications interface at 128 provides connectivity to a variety of communications, target mapping, and/or data fusion equipment via a standard interface such as USB. As the term is used herein, a high performance gyroscope (or "navigation grade gyro") is a gyroscope which has a sufficiently high quality gyroscope and accompanying functionality (for example, a sufficiently high accuracy altitude output) to perform gyro-compassing. Further, as the term is used herein, a high performance gyroscope refers to a single axis gyroscope, as opposed, for example, to a triad of individual orthogonally oriented gyroscopes.

The high performance gyro 110, the inertial measurement unit 112, sighting device 126, and the rangefinder 114 are factory aligned. In one embodiment, the housing of target locator device 100 includes a surface upon which the equipment can rest on during field calibration, and/or a coupler such that it can be optionally mounted on a tripod for use against distant targets.

User interface 122 and user display 120 need to be simple to use, so operational buttons and information displays are kept to a minimum and very clear to operate and understand. In one embodiment, the minimum number of buttons provided by user interface 122 is two: one power on/power off button and one button to fire the rangefinder 114, which will also initiate the target position computation within processor 118. Realignment (described below) is initiated at a restart using the power button. In one embodiment, backlighting for one on both of user interface 122 and user display 120 is adjusted based on the surrounding light intensity. In one embodiment, annunciation via user display 120 is provided either with an LCD display, or kept to a minimum with a number of LED lights in different colors. In one embodiment, additional readouts and menus are available for more advanced users, or users who have more time to consider other target parameters. In one embodiment, when the quality of the target position estimation determined to be acceptable by processor 118, a ready condition is annunciated via user display 120.

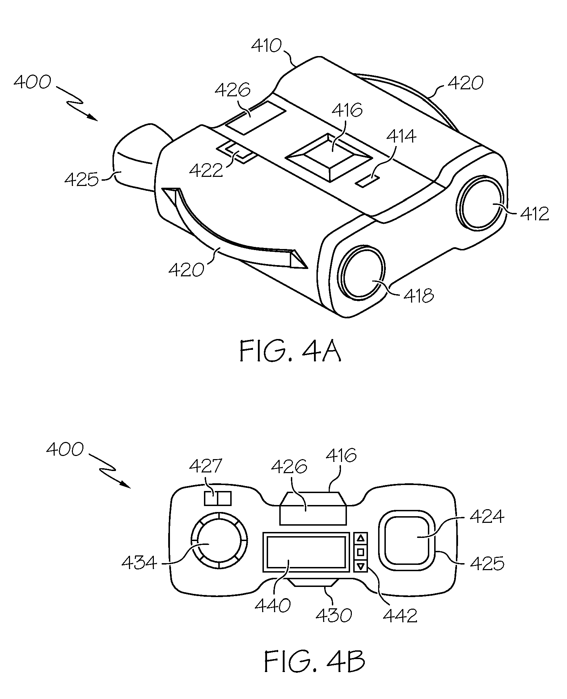

Figures 4A and 4B are diagrams illustrating generally at 400, a physical layout and configuration of a target locator device 400 of one embodiment of the present invention, such as described with respect to target locator device 100 in Figure 1. Target locator device 400 is a handheld device with a housing 410 comprising at least one strap 420 that assists a user in holding target locator device 400 steady while sighting targets through a viewfinder 424, which in this embodiment includes an eye cup 425. Opposite viewfinder 424 on housing 410 are located the rangefinder window 412 and the view scope lens 418. In this embodiment, the communications interface is provided via a USB port, shown generally at 414. An indicator panel 426 provides critical device status and other information to the user, via a light emitting diode (LED) pane visible to the user both from above and behind housing 410, and that shifts from daytime intensity to a Night Vision Device compatible mode to avoid revealing the user's position at night. Further with respect to the user interface and display, housing 410 includes detail display 440 as well as using input functions 442 (Menu, up, down and select buttons, for example) for operating and configuring the device 400 and choosing user selectable options. Antenna 416 provides satellite connectivity for GNSS receiver 116. Power switch 427 is provided to control power to the device, as well as, in one embodiment, initiate the realignment process. Firing switch 422 is used both for obtaining an initial range to a targeting by firing the rangefinder 114 prior to the alignment mode, as well as selecting a target in scanning mode. Housing 410 also includes a tripod mount 430 to facilitate use of device 400 with a tripod. In one embodiment, device 400 is powered via batteries stored behind battery compartment cover 434.

In operation, target locator device 100 operates in either alignment mode or scanning mode. In the alignment mode of operation, embodiments of the present invention provide an alignment process that calibrates accelerometers and gyros within inertial measurement unit 112 to eliminate as much deterministic bias as possible. An estimation of heading is performed by comparing the Earth's rotational rate at the test latitude with the output from the high performance gyro 110 to find North. To minimize the error in the North finding process, the high performance gyro 110 is rotated to have its input axis aligned in approximately the East-West direction. The input axis should also be approximately level, to the degree possible in the given circumstances.

Operation of target locator device 100 in alignment mode can be summarized by three events: **Leveling** -the target locator device 100 is leveled and the inertial measurement unit 112's accelerometer biases are calibrated; **Aligning** - the target locator device 100's azimuth relative to North is measured; and **Gyro bias calibration** - the inertial measurement unit 112's gyro biases are calibrated.

Although the target locator device 100 should go through a complete alignment/calibration process to reach full specified range performance, the calibration process performed in alignment mode can be interrupted when suddenly materializing close up targets appear. In one embodiment, the duration of alignment mode prior to use will be approximately 1 minute to strike targets closer than 500 meters. Alignment mode time increases with range to the target, with less than two minutes required to strike targets at 3.5 kilometers, and 10 minutes for targets at 7 kilometers, all with a CEP accuracy of 7 meters or less. When time permits, the target locator device 100 can be allowed to continue to calibrate in alignment mode for longer periods, which will permit the operator to be able to track targets with greater accuracies on the display 440. In one embodiment, the target locator device 100 is under 8 pounds in weight, which is light enough to be standard equipment for every squad, accurate enough to strike targets at 3.5 km, but fast enough to strike at high-tempo, close-in targets.

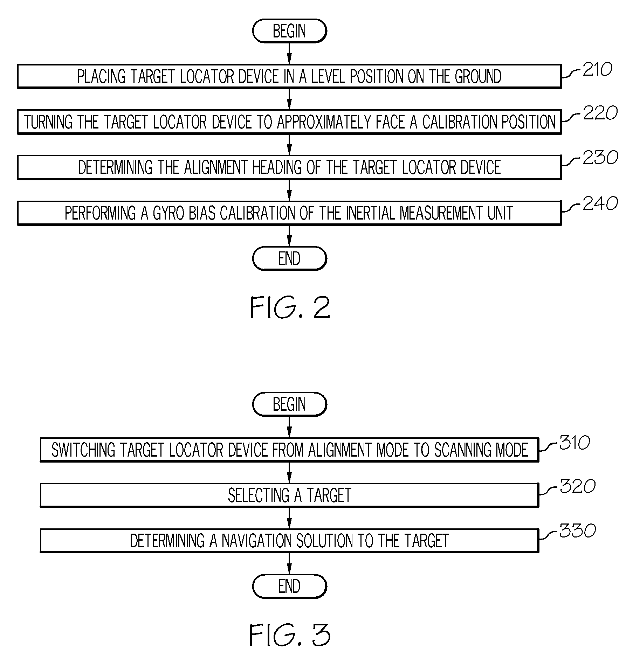

Operation in alignment mode is illustrated by the flowchart of Figure 2. The process begins at 210 with placing the target locator device 100 in a level position on the ground. As mentioned above, target locator device 100 may be placed either directly on the ground or supported by a tripod or similar device. The accelerometers within inertial measurement unit 112 will provide inertial data to processor 118 that will indicate when the target locator device 100 is sufficiently level (indicated on indicator panel 426, for example).

The process proceeds to 220 with turning the target locator device 100 to face a calibration position. In one embodiment, the target locator device 100 is calibrated to North by aligning the device along an East-West direction approximately perpendicular to North. Target locator device 100 measures the Earth's rotational rate from which it can determine what direction it is facing based on the amount of the Earth's rotation the high performance gyro 110 can detect. In one embodiment, indicator panel 426 provides an indicator that notifies the user when target locator device 100 is facing the calibration position.

In one embodiment, the target locator device 100 is placed on a stable surface with the input axis of the high performance gyro approximately level and approximately along an East-West or West-East orientation. Five to ten seconds after the target locator device 100 is powered up it is turned approximately 180 degrees around an approximately vertical axis. In one embodiment, an indicator on indicator panel 426 will inform the user when to turn the device. The leveling task is performed electronically with the accelerometers of the inertial measurement unit 112. The 180 degree manual rotation makes it possible for processor 118 (via a Kalman filter, for example) to separate the level errors from the accelerometer bias. Local gravity information is calculated based on GNSS receiver 116 position information. Knowledge of the accelerometer biases will benefit the navigation solution during the scanning mode.

The process proceeds to 230 with determining the alignment heading of Target locator device 100. The alignment heading is determined based on the amount of Earth's rotation measured by high performance gyroscope 110, the latitude where target locator device 100 is placed, and a measurement of target locator device 100 degree of levelness. As would be appreciated by one of ordinary skill in the art, at different latitude positions on the Earth's surface, different Earth rotation rates are sensed. In one embodiment, latitude coordinates for target locator device 100 are determined from position data supplied by GNSS receiver 116. In one embodiment, the degree of levelness is sensed by inertial measurement unit 112 and provided to processor 118.

The reason for the East-West orientation during the Alignment mode is that processor 118 compares the high performance gyro 110 output to earth's rotation rate to find north. It can be shown that the error is at a minimum when the high performance gyro 110's input axis is perpendicular to the North-South orientation.

The azimuth is found by comparison of the high performance gyro 110 and the assumed earth rate at the target locator device 100 location. Through GNSS receiver 116, the latitude is known and from the leveling phase, the pitch and roll angles of the navigational grade gyro 110's input axis is known. The azimuth angle can then be calculated. The navigational grade gyro 110's performance for alignment is mainly determined by its bias and angular random walk. The align time to get a satisfactory azimuth accuracy depends on latitude. The farther North, the longer align time. As will be discussed later, alignment can be interrupted in case a close range target appears and the target locator device 100 will perform to the alignment performance it had when the Alignment mode was interrupted.

The process then proceeds to 240 with performing a Gyro Bias calibration of inertial measurement unit 112. Processor 118 calculates the alignment heading of Target locator device 100 and calibrates inertial measurement unit 112 using the calculated alignment heading as a directional reference. With inertial measurement unit 112 calibrated using the calculated alignment heading, target locator device 100 can be picked up, moved, and pointed at an intended target. Inertial measurement unit 112 can sense this motion and measure how much its orientation has changed from the calculated alignment heading.

While in alignment mode, data from the inertial measurement unit 112's are collected. At the end of the alignment mode, the target locator device 100's orientation is known. The Earth's actual rotational rate with respect to the inertial measurement unit 112's three sensor axes is thus also known and can be compared with the collected gyro data from the inertial measurement unit 112's gyros. The gyro bias can thus be computed and compensated for.

As an example of one embodiment of target locator device 100 in operation, when a patrol reaches a observation post (or alternatively, for example comes under ambush fire and assumes a defended position from which to call for nearby fire support), preparations to make the target locator device 100 operational begin. The power switch 427 is turned on by the user and the user takes an optional rangefinder 114 measurement to a target by pressing the firing switch 422, to obtain the range to the target. Rangefinder 114 is used only momentarily to measure the distance to a target. Therefore, in one embodiment, rangefinder 114 is left unpowered during the balance of the alignment process.

The user then places the target locator device 100 down on a suitable stable surface (such as a steady rock, or other non-moving surface, for example). In one embodiment, the target locator device 100 is placed so that the input axis to the high performance gyro 110 is roughly leveled and in the East-West direction. The user is guided in the orientation from device 100's user display panel 426. After a short period of time (about 10 seconds, for example) the user display 120 will tell the user to rotate target locator device 100, 180 degrees around its vertical axis. This rotation does not have to be accurate, but target locator device 100 should again end up reasonably leveled along its east-west axis. In one embodiment, satisfactory rotation is indicated on the display panel 426.

Target locator device 100 will now be left to align, and an indication will show when it is ready for targeting in scanning mode operation. If an optional rangefinder 114 measurement was taken, the user display 120 (via panel 426, for example) will indicate the moment the target locator device 100 can be used on a target within that target range with an accuracy of 7 m (1-σ) or better. If the optional rangefinder 114 measurement was not taken at the beginning of the alignment mode, target locator device 100 will indicate when it is ready to be used against a predefine nominal target, such as targets at up to 3.5 km with 7m (1-σ), for example. In one embodiment, if target locator device 100 is left to align further, a display counter will show the range at which target locator device 100 is accurate to at least 7m (1-σ), up to 7 km, and will display further improvement to the accuracy of the target locator device 100. After the targeting device 100 has gone through the alignment process, it can stay in this mode until the target locator device 100 is used for scanning.

Operation in scanning mode is illustrated by the flowchart of Figure 3. The method begins at 310 with switching from alignment mode to scanning mode. In scanning mode the target locator device 100 can be aimed at a target, and the target's position measured. In scanning mode, target locator device 100 calculates navigation solutions for targets, aided by the GNSS receiver 116 and the calibrated inertial measurement unit 112. In one embodiment, target locator device 100 enters scanning mode when inertial measurement unit 112 senses that target locator device 100 has been picked up. Because high performance gyro 110 is used only for the north finding process, it can be depowered in scanning mode when scanning for targets. Thus, in one embodiment, as soon as the target locator device 100 is picked up, the power to the high performance gyro 110 is turned off to save power.

The method proceeds to 320 with selecting a target. The target locator device 100 is aimed at the target by locating the target through sighting device 126 (viewfinder 424). When the target is in the sighting device 126's crosshairs, the firing button 422 is pressed to measure the target position of the select the target.

The process proceeds to 330 with determining a navigation solution to the target. In one embodiment, when the target is selected in the crosshairs and firing button 422 is pressed, rangefinder 114 fires a laser and returns the distance to the target to processor 118. GNSS receiver 116 provides the position of the target locator device 100. Inertial measurement unit 112 provides the direction in which target locator device 100 is aimed, based on the senses angular deviation from the alignment heading.

Processor 118 calculates a navigation solution based on the outputs from inertial measurement unit 112 aided by position and velocity information from GNSS receiver 116. With knowledge of the distance to the target, the position of the target locator device 100, and the attitude angles, the position of the target in latitude, longitude and altitude is computed by processor 118 and displayed on user display 120. In one embodiment, this information is further output to a connected communications device for sharing. For example, the resulting coordinates of the target, in one embodiment, are relayed to a weapons platform, to other target locator device 100s, or to command systems.

From the time the system is moved away from its alignment position, the system can be used for sighting until the display indicates that it needs to be realigned. The realign process is identical to the start up procedure after power has been turned on.

In one embodiment, the gyro bias calibration will continue until the scanning mode is initiated by the user. The operator can either begin using the target locator device 100 when it indicates it has reached minimum readiness accuracy, or can allow the target locator device 100 to continue to align for greater accuracy, greater range, or longer scanning time before recalculation. When the target locator device 100 switches to scanning mode, the algorithms perform a full navigation solution aided by GNSS. The leveling information and the sensor bias information is used to initialize the solution. The quality of the inertial measurement unit 112 sensors and the estimation of bias errors in the previous alignment mode define the length of time the scanning mode can operate within specified requirements.

**Method for determining azimuth error during Align mode**

The earth rotation rate in the Earth-Centered-Earth-Fixed, ECEF, system can be written as

$$\omega_{ECEF} = \begin{bmatrix} 0 \\ 0 \\ \omega_E \end{bmatrix}$$

where $\omega_E$ is the earth rate and, $\omega_{ECEF}$ is the earth rate coordinatized in the ECEF frame.

Transformed into the *NED* system, the earth rate can be written,

$$\omega_{NED} = \begin{bmatrix} \cdots & \cdots & \cos\phi \\ \cdots & \cdots & 0 \\ \cdots & \cdots & -\sin\phi \end{bmatrix} \begin{bmatrix} 0 \\ 0 \\ \omega_E \end{bmatrix} = \begin{bmatrix} \omega_E \cdot \cos\phi \\ 0 \\ -\omega_E \cdot \sin\phi \end{bmatrix}$$

where $\phi$ is the latitude and,
$\omega_{NED}$ is the earth rate coordinatized in the NED frame.

In the one-gyro alignment, the gyro measurement is compared with the earth rate transformed into the body frame. If we assume that the gyro is oriented along the body x-axis,

$$\begin{bmatrix} \omega_M \\ \cdots \\ \cdots \end{bmatrix} = C^{-1} \begin{bmatrix} \omega_E \cdot \cos\phi \\ 0 \\ -\omega_E \cdot \sin\phi \end{bmatrix}$$

where C is the body to *NED* transformation matrix and,
$\omega_M$ is the rate measured by the gyro.

or

$$\begin{bmatrix} \omega_N \\ \cdot \\ \cdot \end{bmatrix} = \begin{bmatrix} \cos\psi \cdot \cos\theta & \cdot & 0 \\ \cdot & \cdot & 0 \\ -\sin\theta & \cdot & \cdot \end{bmatrix}^{-1} \begin{bmatrix} \omega_E \cdot \cos\phi \\ 0 \\ -\omega_E \cdot \sin\phi \end{bmatrix}$$

where θ is the gyro input axis elevation angle with the horizontal plane and,
Ψ is the gyro input axis azimuth angle.

This can be simplified to,

$$\omega_N = \omega_E \cdot [\cos\phi \cdot \cos\psi \cdot \cos\theta + \sin\phi \cdot \sin\theta]$$

Solving for Ψ,

$$\psi = \arccos\left(\frac{\omega_N - \omega_E \cdot \sin\phi \cdot \sin\theta}{\omega_E \cdot \cos\phi \cdot \cos\theta}\right)$$

The leveling is determined from the IMU's three accelerometers. The output from the three accelerometers normalized to the magnitude of gravity, defines the vertical orientation vector. The leveling error is therefore due to accelerometer bias, scale factor and misalignment errors. The error in alignment between gyro and sight scope is also part of the elevation accuracy. To separate the turn-on-to-turn-on accelerometer bias from the tilt measurement, a rotation of the target locator device around a vertical axis is performed during the leveling process.

**Computation of target coordinates**

In one embodiment, the observer position is measured by the GNSS receiver 116 and can be expressed as coordinates in ECEF (Earth-Centered-Earth-Fixed), or in geographic coordinates, latitude, longitude and altitude. The altitude can be defined as height over the ellipsoid or over the geoid height, with the transformation defined in World Geodetic System (WSG) version WGS 84. Either altitude definition can be used, but has to be consistently applied throughout the calculation.

The vector from the observer using target locator device 100 to the target in the local NED (North-East-Down) coordinate frame is defined by the distance to the target as measured by the laser range finder 114, $d_{LRF}$, the azimuth, *az*, and elevation, *el*, to the target as measured by the inertial reference unit 112,

$$r_{NED} = d_{lrf} \begin{bmatrix} \cos(az) \cdot \cos(el) \\ \sin(az) \cdot \cos(el) \\ \sin(el) \end{bmatrix}$$

The vector from the observer to the target in the NED frame can be transformed into the ECEF frame with the following coordinate transformation,

$$r_{ECEF} = \begin{bmatrix} -\sin\phi \cdot \cos\lambda & -\sin\lambda & -\cos\phi \cdot \cos\lambda \\ -\sin\phi \cdot \sin\lambda & \cos\lambda & -\cos\phi \cdot \sin\lambda \\ \cos\phi & 0 & -\sin\phi \end{bmatrix} \cdot r_{NED}$$

where φ is latitude and λ is longitude.

7

To get the target coordinates in the ECEF system, the observer coordinates are added to the observer-to-target vector,

$$
\begin{bmatrix} x_{target} \\ y_{target} \\ z_{target} \end{bmatrix} = \begin{bmatrix} x_{observer} \\ y_{observer} \\ z_{observer} \end{bmatrix} + \begin{bmatrix} -\sin\phi \cdot \cos\lambda & -\sin\lambda & -\cos\phi \cdot \cos\lambda \\ -\sin\phi \cdot \sin\lambda & \cos\lambda & -\cos\phi \cdot \sin\lambda \\ \cos\phi & 0 & -\sin\phi \end{bmatrix} \cdot d_{trgt}
$$

$$
\cdot \begin{bmatrix} \cos(az) \cdot \cos(el) \\ \sin(az) \cdot \cos(el) \\ \sin(el) \end{bmatrix}
$$

Depending on the use of the target coordinates, the target coordinates can be expressed in ECEF or geographic coordinates. Transformation between ECEF and geographic coordinates is a standard textbook calculation. Note, the local vertical is perpendicular to the ellipsoid on the ellipsoid surface, but at altitudes above or below the ellipsoid, the orientation deviates from the normal to the ellipsoid. The error is however small, less than 100 μrad within a plus/minus 250,000 ft distance from the ellipsoid. This small correction has therefore been ignored.

Several means are available to implement the systems and methods of the current invention as discussed in this specification. These means include, but are not limited to, digital computer systems, microprocessors, general purpose computers, programmable controllers and field programmable gate arrays (FPGAs) or application-specific integrated circuits (ASICs). Therefore other embodiments of the present invention are program instructions resident on computer readable media which when implemented by such means enable them to implement embodiments of the present invention. Computer readable media include any form of a physical computer memory storage device. Examples of such a physical computer memory device include, but is not limited to, punch cards, magnetic disks or tapes, optical data storage system, flash read only memory (ROM), non-volatile ROM, programmable ROM (PROM), erasable-programmable ROM (E-PROM), random access memory (RAM), or any other form of permanent, semi-permanent, or temporary memory storage system or device. Program instructions include, but are not limited to computer-executable instructions executed by computer system processors and hardware description languages such as Very High Speed Integrated Circuit (VHSIC) Hardware Description Language (VHDL).

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

**Claims**

1. A target locator device (100), the device comprising:

   a high performance gyroscope (110);
   an inertial measurement unit (112) including an accelerometer triad and a gyroscope triad;
   a rangefinder (114);
   a global navigation satellite system (GNSS) receiver (116); and
   a processor (118) coupled to the high performance gyroscope (110), the inertial measurement unit (112), the rangefinder (114) and the GNSS receiver (116);
   wherein the processor (118) derives an alignment heading from a heading measurement provided by the high performance gyroscope (110);
   wherein the processor (118) calculates a heading to a target based on a deviation from the alignment heading as measured from a heading and elevation measurement determined from the inertial measurement unit (112).

2. The device of claim 1, wherein the processor (118) calculates a position of a target based on the heading to the target, a position of the target locator device as determined from position data provided by the GNSS receiver (116) and a range to the target as determined by the rangefinder (114).

3. The device of claim 1, wherein the alignment heading is determined by the processor (118) based on an amount of Earth's rotation as measured by the high performance gyroscope (110).

**4.** The device of claim 1, where the alignment heading is further determined by the processor (118) based on an estimate of a latitude position of the device as measured by the GNSS receiver (116), and an estimate of a level attitude as measured by the accelerometer triad.

**5.** The device of claim 1, wherein the processor (118) derives the alignment heading based on a heading measurement provided by the high performance gyroscope (110) when an axis of the high performance gyroscope (110) is approximately aligned in an East-West direction.

**6.** The device of claim 1, further comprising an indicator that indicates when to perform a 180 degree turn of the device while the processor (118) is deriving the alignment heading.

**7.** The device of claim 1, wherein the processor (118) maintains a heading of the target locator device when operating in a scanning mode using measurements from the inertial measurement unit (112).

**8.** The device of claim 1, further comprising a user display (120);
wherein the processor (118) outputs to the user display (120) an estimate of a target position accuracy, based on a current heading accuracy of the inertial measurement unit (112).

**9.** The device of claim 1, further comprising a user display (120);
wherein the processor (118) outputs to the user display (120) when a current heading accuracy of the inertial measurement unit (112) is sufficient to calculate a position of a target within a predetermined error at a user selected target range.

**10.** The device of claim 1, further comprising:

at least one sighting scope (126) for locating the target; and
a user activated switch (422) that activates the range finder (114) and that initiates calculation of the position of the target.

FIG. 1

BEGIN

PLACING TARGET LOCATOR DEVICE IN A LEVEL POSITION ON THE GROUND — 210

TURNING THE TARGET LOCATOR DEVICE TO APPROXIMATELY FACE A CALIBRATION POSITION — 220

DETERMINING THE ALIGNMENT HEADING OF THE TARGET LOCATOR DEVICE — 230

PERFORMING A GYRO BIAS CALIBRATION OF THE INERTIAL MEASUREMENT UNIT — 240

END

FIG. 2

BEGIN

SWITCHING TARGET LOCATOR DEVICE FROM ALIGNMENT MODE TO SCANNING MODE — 310

SELECTING A TARGET — 320

DETERMINING A NAVIGATION SOLUTION TO THE TARGET — 330

END

FIG. 3

FIG. 4A

FIG. 4B

Europäisches
Patentamt
European
Patent Office
Office européen
des brevets

## EUROPEAN SEARCH REPORT

Application Number

EP 11 15 2152

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/103671 A1 (ASH WILLIAM M [US]) 10 May 2007 (2007-05-10) | 1,2,7,10 | INV. F41G3/02 |
| Y | * abstract; figures 1,3,7 * <br> * paragraph [0017] - paragraph [0026] * <br> * paragraph [0032] - paragraph [0035] * <br> * paragraph [0055] - paragraph [0056] * <br> ----- | 3-6,8,9 | F41G3/06 G01S17/02 G01C19/38 G01S7/497 |
| X | US 2004/134341 A1 (SANDOZ STEPHANE [FR] ET AL) 15 July 2004 (2004-07-15) | 1,2,7,10 | |
| A | * abstract * <br> * paragraph [0102] - paragraph [0104] * <br> * paragraph [0209] * <br> ----- | 3-6,8,9 | |
| Y | EP 0 077 491 A1 (LITEF LITTON TECH HELLIGE [DE]) 27 April 1983 (1983-04-27) <br> * abstract * <br> ----- | 3-6 | |
| A | US 4 033 045 A (WING WILLIS G) 5 July 1977 (1977-07-05) <br> * abstract * <br> ----- | 3-6 | |
| Y | US 2005/229411 A1 (GNEPF SILVIO [CH] ET AL) 20 October 2005 (2005-10-20) <br> * abstract * <br> ----- | 8,9 | TECHNICAL FIELDS SEARCHED (IPC) <br> F41G G01S G01C |
| A | US 6 064 942 A (JOHNSON MARK W [US] ET AL) 16 May 2000 (2000-05-16) <br> * abstract * <br> ----- | 1,8,9 | |

The present search report has been drawn up for all claims

| Place of search | Date of completion of the search | Examiner |
|---|---|---|
| The Hague | 9 June 2011 | Vial, Antoine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 15 2152

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2011

| Patent document cited in search report | | Publication date | Patent family member(s) | | Publication date |
|---|---|---|---|---|---|
| US 2007103671 | A1 | 10-05-2007 | US 2007103673 A1<br>US 2007127008 A1 | | 10-05-2007<br>07-06-2007 |
| US 2004134341 | A1 | 15-07-2004 | AT 435413 T<br>AU 2002313023 A1<br>EP 1407214 A2<br>FR 2824132 A1<br>WO 02088616 A2 | | 15-07-2009<br>11-11-2002<br>14-04-2004<br>31-10-2002<br>07-11-2002 |
| EP 0077491 | A1 | 27-04-1983 | DE 3141405 A1 | | 26-05-1983 |
| US 4033045 | A | 05-07-1977 | DE 2646448 A1<br>FR 2328180 A1<br>GB 1554204 A<br>GB 1554205 A<br>IT 1069958 B<br>JP 1001727 B<br>JP 1534311 C<br>JP 52048353 A<br>NL 7611225 A | | 28-04-1977<br>13-05-1977<br>17-10-1979<br>17-10-1979<br>25-03-1985<br>12-01-1989<br>12-12-1989<br>18-04-1977<br>18-04-1977 |
| US 2005229411 | A1 | 20-10-2005 | AU 2005201584 A1<br>CH 697492 B1<br>DE 102005017320 A1<br>FR 2869104 A1<br>FR 2916839 A1<br>GB 2414555 A | | 03-11-2005<br>14-11-2008<br>10-11-2005<br>21-10-2005<br>05-12-2008<br>30-11-2005 |
| US 6064942 | A | 16-05-2000 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 61301896 B